# EUROPÄISCHE PATENTSCHRIFT

(11) **EP 0 803 664 B1**
(45) Veröffentlichungstag und Bekanntmachung des Hinweises auf die Patenterteilung: **27.11.2002**
(21) Anmeldenummer: 97103398.0
(22) Anmeldetag: 01.03.1997
(51) Int. Cl.: F16H 61/36, F16H 59/04

(54) **Gangschalteinrichtung zur manuellen Betätigung eines mehrgängigen Schaltgetriebes**
Gear shift device for manual control of a multi-speed gearbox
Dispositif de commande de vitesse manuelle pour commander une boîte de vitesses à plusieurs rapports

(30) Priorität: 27.04.1996 DE 19617026
(43) Veröffentlichungstag der Anmeldung: 29.10.1997
(73) Patentinhaber: Volkswagen Aktiengesellschaft, 38436 Wolfsburg (DE)
(72) Erfinder: Gudlin, Tamas, Dr.-Ing., 38102 Braunschweig (DE); Tschachschal, Arne, 38102 Braunschweig (DE)

(56) Entgegenhaltungen:
- EP-A- 0 032 883
- EP-A- 0 170 132
- DE-A- 19 526 995
- US-A- 4 261 220
- US-A- 4 493 224

## Beschreibung

Die Erfindung betrifft eine Schalteinrichtung zur manuellen Betätigung eines mehrgängigen Schaltgetriebes, vorzugsweise eines Kraftfahrzeuges gemäß den Merkmalen des Oberbegriff des Patentanspruchs 1.

Eine Gangschalteinrichtung für ein Schaltgetriebe ist beispielsweise aus der DE - 41 28 161 bekannt. Sie besitzt einen Handschalthebel der von einem Fahrer zum Wählen eines Getriebeganges in eine erste Richtung und zum Schalten in eine zweite, zur ersten unter einem rechten Winkel verlaufende Richtung bewegt bzw. geschwenkt werden kann. Eine mechanische Kraftübertragungseinrichtung überträgt die Bewegungen des Handschalthebels auf das Schaltgetriebe bzw. dessen Betätigungsglieder, im Regelfall eine verschiebbare sowie um ihre Längsachse verdrehbare Schaltwelle.

Das Schaltgetriebe, die Kraftübertragungseinrichtung und der Handschalthebel sind üblicherweise in der Art ausgebildet und ausgerichtet, daß der Handschalthebel zunächst in Querrichtung zur Fahrzeugachse verschwenkt wird, um eine bestimmte Wählposition zu erreichen. Anschließend wird der Handschalthebel entweder in Richtung der Fahrzeugachse nach vorne oder nach hinten verschwenkt, µm in den gewünschten Gang zu schalten.

Die Kraftübertragungseinrichtung besteht aus verdreh- und verschiebbaren Schaltstangen, die über einen vielfach gelagerten Hebelmechanismus am Handschalthebel bzw. an der Schaltwelle angekoppelt sind.

Diese Kraftübertragungseinrichtungen neigen dazu, Aggregatschwingungen und bewegungen zu dem Handschalthebel weiterzuleiten, was von dem Fahrer eines solchen Fahrzeuges als unkomfortabel empfunden wird, unerwünschte Geräusche erzeugt und einen zusätzlichen Aufwand an Dämpfungsmitteln erfordert. Bei sehr starken Aggregatschwingungen bzw. -bewegungen können die Gänge sogar herausspringen. Der Schaltkomfort erfordert es, daß der Handschalthebel in einer bequemen Reichweite des Fahrers im Fahrzeug angeordnet ist; anderseits richtet sich die Lage des Getriebes nach den Einbaumöglichkeiten des Antriebsstranges im Fahrzeug. Deshalb muß die Kraftübertragungseinrichtung häufig einen erheblichen Abstand überbrücken und einen Versatz in den Bewegungsrichtungen ausgleichen. Dadurch werden die bekannten Schalteinrichtungen sehr komplex. Die häufig erforderliche große Anzahl der Lagerstellen ergibt zwangsläufig viel Spiel, welches das Schaltgefühl ebenfalls beeinträchtigt (unexaktes Schaltgefühl).

Außerdem ist aus der EP 0 032 883 A1 eine Schalteinrichtung für ein Handschaltgetriebe bekannt, bei der ein Schalteinrichtungsgehäuse einen Kugelzapfen aufweist, auf dem eine mit einem Handschalthebel verbundene und eine Kugelpfanne umfassende Schwenkplatte gelagert ist. Zur Vermeidung einer Drehbewegung des Schalthebels um seine Längsachse ist in der Schwenkplatte eine in etwa achsparallel ausgerichtete Ringnut ausgebildet, in die ein gehäusefester Führungsstift hineinragt.

Vor diesem Hintergrund besteht die Aufgabe der Erfindung darin, die letztgenannte gattungsbildende Schalteinrichtung so weiterzubilden, daß bei einer preisgünstigeren Konstruktion eine exaktere Übertragung der Schaltbewegungen erreicht wird.

Die Aufgabe wird durch die Merkmale des Anspruchs 1 gelöst, während vorteilhafte Ausgestaltungen und Weiterbildungen der Erfindung den Unteransprüchen entnehmbar sind.

Erfindungsgemäß umfaßt die gegenüber dem Stand der Technik weitergebildete Schalteinrichtung zur Verhinderung einer Schwenk- oder Drehbewegung des Lagergehäuses um dessen Längsachse "Z" einen Bolzen, der auf einer Schwenkachse außen am Lagergehäuse befestigt ist und mit seinem freien Ende in einer Nut geführt ist, die Schwenkbewegungen zu den zwei definierten Schwenkachsen "X, Y" zuläßt.

Die Seilzüge der Schaltvorrichtung sind in einer Weiterbildung der Erfindung auf der einen Seite durch Seilaufnahmen mit dem Lagergehäuse verbunden und auf der anderen Seite mit Seilaufnahmen oder sonstigen Befestigungselementen mit dem Betätigungsglied. Die Seilaufnahmen oder Befestigungselemente, mit denen das Betätigungsglied, z.B. die Schaltwelle, geschwenkt wird, sind mit gleichem oder unterschiedlichem Abstand von der Schwenkachse des Betätigungsgliedes angeordnet. Die Seilaufnahmen oder Befestigungselemente, die das Betätigungsglied in Längsrichtung verstellen, können sich auf der Stellachse oder auch in gleichem oder unterschiedlichem Abstand daneben befinden.

In Abhängigkeit von den Abständen der Seilaufnahmen oder Befestigungselemente des Betätigungsglied zu dessen Schwenk- oder Stellachse und von der gewünschten Übersetzung, können die Seilaufnahmen pro Schwenkachse unterschiedliche oder gleiche Abstände zu der Schwenkachse des Lagergehäuses aufweisen.

Entscheidend ist, daß ein in sich bewegbares System entsteht, daß sich nicht in seiner Bewegung selbst hemmt und daß die Seilzüge ständig unter Zugspannung stehen, d. h. in keiner Schwenkstellung durchhängen, wodurch ein präzises, ruckfreies Schalten nicht mehr möglich wäre.

Bei der Übertragung der Schalt- und der Wählbewegung durch Seilzüge, können die Seilaufnahmen beispielsweise an einem vorteilhaft zylindrisch ausgebildeten Lagergehäuse auf einer Ebene im Abstand von 90 Grad auf den Schwenkachsen angeordnet sein.

Die an einer Achse paarweise angebrachten Seilzüge können verspannt werden, indem sie gegenseitig der Vorspannung entgegenwirken, wodurch eine spielfreie Bewegungsübertragung erreicht wird. Eine einzelne Schaltstange, die für die Stell- und Rückstellbewegung auf Zug und Druck belastet wird, kann dagegen nicht in der Art vorgespannt werden.

Durch eine spielfreie Einstellung wird beim Fahrer ein exaktes Schaltgefühl geschaffen, wodurch der Komfort erhöht wird.

Mit Seilzügen können bei geringem Gewicht große Abstände überbrückt und mit einfachen Seilführungen Versatz ausgeglichen und schwierige räumliche Verhältnisse gemeistert werden.

Ebenfalls positiv auf den Komfort wirkt sich aus, daß die elastischen und biegsamen Seilzüge die Aggregateschwingungen und -bewegungen ausgleichen, und die Schwingungskomponenten in alle Richtungen vom Handschalthebel entkoppelt werden. Insgesamt zeigen Seilzüge gegenüber Schaltstangen, insbesondere wegen ihrer geringen Masse, in Bezug auf Schwingungserregung und -weiterleitung, ein günstigeres Verhalten.

Ein weiterer Vorteil der Seilzüge ist, daß die Betätigungsrichtungen am Handschalthebel der Wähl- und Schaltbewegungen einfach umkehrbar sind, indem die Seilzüge entsprechend an den Seilaufnahmen angekoppelt werden.

Besonders vorteilhaft ist, daß die Seilenden direkt an dem schwenkbaren Lagergehäuse befestigt sind und durch dessen Schwenkbewegungen ausgelenkt werden, wodurch die Anzahl der Lager und bewegten Teile sowie das Spiel und die Reibung minimiert und die Leichtgängigkeit gefordert wird. Weniger Bauteile bedeuten zudem einen Kostenvorteil und eine einfachere Montage.

Der Handschalthebel wird zum Wählen und Schalten von Gängen um zwei Schwenkachsen geschwenkt. Das Lagergehäuse, das mit dem Handschalthebel fest, möglicherweise jedoch auch lösbar verbunden ist, führt die Schwenkbewegungen mit aus und leitet diese über die Seilaufnahmen auf die Seilzüge weiter. Die Schwenkachsen, auf denen das Lagergehäuse gelagert wird, können durch zwei sich kreuzende Achsen, z.B. durch ein Kardangelenk, gebildet werden. Eine weitere erfindungsgemäße vorteilhafte Ausgestaltung besteht darin, das Lagergehäuse mit einer Kugelpfanne auszubilden und dieses auf einem Kugelzapfen zu lagern, wodurch die beiden Achsen eingespart und insgesamt weniger Bauteile benötigt werden.

Durch Seilaufnahmen, die versetzt zu den Schwenkachsen am Lagergehäuse angebracht sind, wird erreicht, daß die Wähl- und die Schaltbewegung voneinander abhängen. Dies wird zudem erreicht, wenn die Schwenkachsen nicht senkrecht aufeinander stehen. Ist das Lagergehäuse nicht auf einem Kugelzapfen, sondern auf zwei getrennten Achsen gelagert, so kann eine Abhängigkeit der Wähl- und Schaltbewegung erreicht werden, indem sich die Achsen in unterschiedlichen Ebenen befinden.

Durch die Schwenkbewegung des Lagergehäuses verändern sich die Winkelstellungen der Achsen der Seilzüge zu den Seilaufnahmen. Um hierdurch in den Seilaufnahmen entstehende Spannungen zu vermeiden, sind die Kontaktflächen der Enden der Seilzüge und der Seilaufnahmen so gestaltet, daß sich die Enden der Seilzüge relativ zu den Seilaufnahmen bewegen können, so daß stets die Seilzüge bis zu ihrem Ende eine Gerade bilden. Dies kann konstruktiv einfach durch Seilzüge erreicht werden, die kugelige Enden aufweisen und in kugelschalförmigen Seilaufnahmen gelagert sind, oder die Seilaufnahmen sind kugelig und die Seilendstücke bilden die Kugelschale.

Indem unterschiedlichen Wählpositionen unterschiedliche Schaltbewegungen zugeordnet sind, d. h. die Wähl- und Schaltbewegung gegenseitig voneinander abhängen, wird eine zusätzliche Vorspannung, dadurch ein geringes Spiel und damit ein exaktes Schaltgefühl beim Fahrer erreicht. Der Fahrer kann leichter an der Art der Schaltbewegung - erforderliche Kraft, Länge der Bewegung und Richtung - erkennen auf welcher Wähl- oder Schaltposition er sich befindet.

In der Zeichnung sind Ausführungsbeispiele der Erfindung dargestellt.

In der Beschreibung und in den Ansprüchen sind zahlreiche Merkmale im Zusammenhang dargestellt und beschrieben.

Der Fachmann wird die Merkmale zweckmäßigerweise auch einzeln betrachten und zu sinnvollen Kombinationen zusammenfassen.
Es zeigen:
- Fig. 1: ein Lagergehäuse mit Seilaufnahmen,
- Fig. 2,3,4: eine Funktionszeichnung zu möglichen Abstandsanordnungen,
- Fig. 5,: eine schematische Darstellung zu möglichen Anordnungen der Seilaufnahmen am Lagergehäuse aus der Sicht der z-Achse,
- Fig. 6: eine schematische Darstellung aus der Sicht der y-Achse.

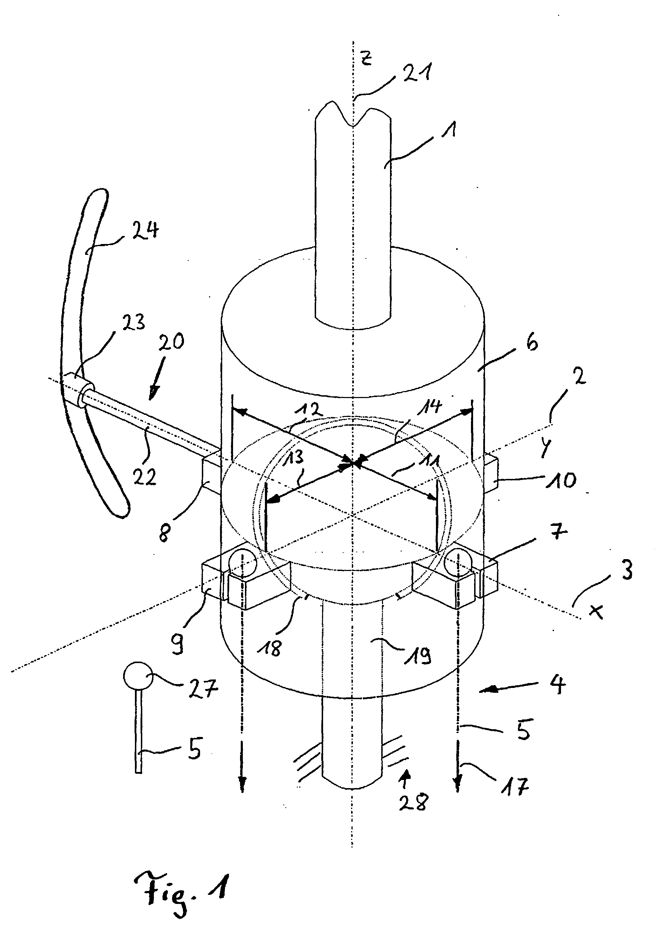

In Figur 1 ist ein Teil eines Handschalthebels 1 dargestellt, der mit einem Lagergehäuse 6 fest, jedoch möglicherweise auch lösbar, verbunden ist. Am Umfang des Lagergehäuses 6 sind vier Seilaufnahmen 7, 8, 9, 10 fest angebracht. In den Seilaufnahmen 7, 8, 9, 10 sind Seilzüge 5 mit einem kugeligen oder kugelschalenförmigen Ende 27 gelagert, die eine Verbindung zwischen dem Lagergehäuse 6 und den Betätigungsgliedem 16 eines Schaltgetriebes herstellen.

Das Lagergehäuse 6 ist mit einer Kugelpfanne 18 auf einem Kugelzapfen 19 schwenkbar gelagert, der fest mit einem Schaltgehäuse 28, möglicherweise auch lösbar, verbunden ist. Die Kugelpfanne 18 ist vorteilhaft auf der den Seilzügen 5 abgewandten Seite geschlossen, umschließt die Kugel des Kugelzapfens 19 um mehr als die Hälfte und ist zur Montage zweckmäßigerweise aufgeschlitzt. Dadurch wird das Lagergehäuse 6 stets durch die in den Seilzügen 5 wirkenden Kräfte auf den Kugelzapfen 19 gepreßt und eine exakte Führung erreicht.

Die Schwenkbewegung des Lagergehäuses 6 ist auf zwei definierte Schwenkachsen 2, 3 durch eine Vorrichtung 20 beschränkt, wodurch ausschließlich Schwenkbewegungen in Wähl- und Schaltrichtung zugelassen werden. Die Vorrichtung besteht aus einem Bolzen 22, der auf einer Schwenkachse 3 am Umfang der Lagergehäuses 6 angebracht ist und mit seinem freien Ende 23 in einer Nut 24 geführt wird. Die Nut 24 erstreckt sich in Richtung der dritten Achse 21 und ermöglicht die Schwenkbewegungen um die Schwenkachsen 2, 3, indem das Ende des Bolzens 23 eine Rotationsbewegung und eine Bewegung in Längsrichtung in der Nut 24 ausführen kann.

Durch die Schwenkbewegung des Handschalthebels 1 und damit auch des mit diesem fest verbunden Lagergehäuses 6, werden die Enden 27 der Seilzüge 5 ausgelenkt, wodurch über die Seilzüge 5 eine Stellbewegung, die Wähl- oder Schaltbewegung, an die Betätigungsglieder 16, in der Regel die Schaltwelle, übertragen werden.

Die Figuren 2, 3, 4 stellen eine Funktionszeichnung zu den verschiedenen Anordnungen der Seilaufnahmen 7, 8, und 29, 30 dar. Diese Anordnungen können genau so für die Seilaufnahmen 9, 10 und die getriebeseitigen Aufnahmen angewendet werden.

Da von Seilzügen nur Zugkräfte übertragen werden können, sind pro Schwenkachse 2, 3 zwei Seilzüge 5 erforderlich, um eine Stell- und Rückstellkraft zu erzeugen. Die Seele dieser Seilzüge kann auch einteilig sein. Um durch eine Schwenkbewegung des Handschalthebels 1 z. B. eine Auslenkung der Seilaufnahmen 7, 8 am Lagergehäuse 6 zu erreichen und durch eine Auslenkung der Seilaufnahmen bzw. Befestigungselemente 29, 30 am Betätigungsglied 16 eine Schwenkbewegung zu erzeugen, müssen die Seilaufnahmen 7, 8, 29, 30 einen Abstand 11, 12, 13, 14; 31, 32 von der Schwenkachse 2, 3; 15 aufweisen. Von dem Zusammenwirken dieser Abstände 11, 12, 31, 32 und deren Orientierung zum Drehpunkt, ist zum einen die Bewegungsfreiheit und zum anderen das erreichte Übersetzungsverhältnis abhängig.

In Figur 2 sind alle Abstände 11, 12, 31, 32 gleich und die Schwenkachsen 2, 15 befinden sich in der Mitte zwischen den Seilaufnahmen 7, 8; 29, 30. Dies stellt ein konstruktiv sehr einfache Lösung dar, bei der die Bewegungskomponenten 33, 34, 35, 36 alle gleich groß sind, d. h. es entsteht keine Übersetzung.

In Figur 3 dagegen sind nur jeweils die gegenüberliegenden Abstände 12, 31; 11, 32 gleich. Hierdurch entstehen auf der Seite der kleineren Abstände 12, 31 kleinere Bewegungskomponenten 33, 35 wie auf der Seite der größeren Abstände 11, 32. Es entsteht ein Übersetzungsverhältnis ungleich eins. Durch ein Übersetzungsverhältnis kann man die Kraft und die Wege am Handschalthebel optimieren. Zudem können durch derartige Anordnungen Platzprobleme gelöst werden.

Figur 4 stellt ein drittes Beispiel dar, bei welchem die Abstände 11, 12 am Lagergehäuse 6 und die Abstände 31, 32 am Betätigungsglied 16 gleich groß sind; jedoch sind die Abstände 11, 12 am Lagergehäuse 6 größer als die Abstände 31, 32 am Betätigungsglied 16. Hierdurch entsteht ebenfalls ein Übersetzungsverhältnis ungleich eins. Die Bewegungskomponenten 35, 36 am Betätigungsglied 16 sind größer als die am Lagergehäuse 6. Diese Anordnung wäre auch umgekehrt denkbar.

Für die einwandfreie Funktion ist ein Regelfall anzustreben, daß das Verhältnis der Abstände 12/31 gleich dem Verhältnis 11/32 ist.

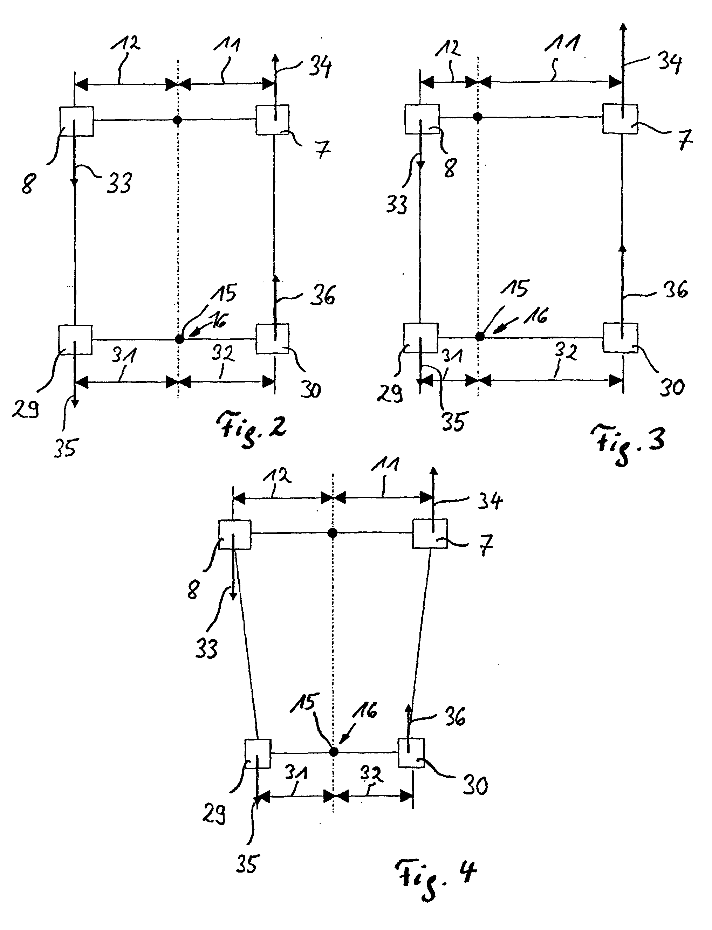

Figur 5 zeigt aus der Sicht der z-Achse drei mögliche Anordnungen der Seilaufnahmen 7, 8, 9, 10 am Lagergehäuse 6. In der ersten Anordnung befinden sich die Seilaufnahmen 7, 8, 9, 10 auf den Schwenkachsen 2, 3 des Lagergehäuses 6. Bei einer derartigen Anordnung sind die Wähl- und Schaltbewegung unabhängig voneinander, wenn sich die Seilaufnahmen 7, 8, 9, 10 in einer Ebene befinden. Dies ergibt sich daraus, daß bei einer Schwenkbewegung um eine Schwenkachse 2; 3 jeweils die Seilaufnahmen 7, 8; 9, 10 auf der anderen Schwenkachse 2; 3 keine Auslenkung erfahren, da sie auf der Schwenkachse 2; 3 liegen.

Demgegenüber entsteht eine Abhängigkeit der Wähl- und Schaltbewegung bei den nächsten zwei Anordnungen, die beispielhaft mit gestrichelten Linien dargestellt sind. Bei der zweiten Anordnung sind beispielhaft die Seilaufnahmen 9, 10, die um die Schwenkachse 3 ausgelenkt werden, parallel neben der Schwenkachse 2 angeordnet. Wird beispielsweise um die Schwenkachse 2 in Richtung der Seilaufnahme 7 geschwenkt, so werden die Seilaufnahmen 9, 10 mit ausgelenkt, d. h. es entsteht in diesem speziellen Fall eine zusätzliche Zugspannung auf die Seilzüge 5 in den Seilaufnahmen 9, 10.

In der dritten Anordnung ist die Seilaufnahme 10 rechts gegenüber der Schwenkachse 2 und die Seilaufnahme 9 links gegenüber der Schwenkachse 2 versetzt. Es besteht ebenfalls eine Abhängigkeit zwischen Wähl- und Schaltbewegung, wobei in diesem Fall ein Seilzug 5 eine größerer Zugspannung und ein Seilzug 5 eine geringe Zugspannung erfährt.

Grundsätzlich sinnvoll erscheint es, die Wählpositionen, 1 Gang, 2 Gang, 3 Gang, 4 Gang, 5 Gang, Rückwärtsgang, sowie die Schaltpositionen 1 Gang, 2 Gang; 3 Gang, 4 Gang; 5 Gang um einen Umkehrpunkt, d. h. um 0, 90, 180, 270 oder 360 Grad um eine Schwenkachse 2; 3 anzuordnen, wodurch große Auslenkungen erreicht werden.

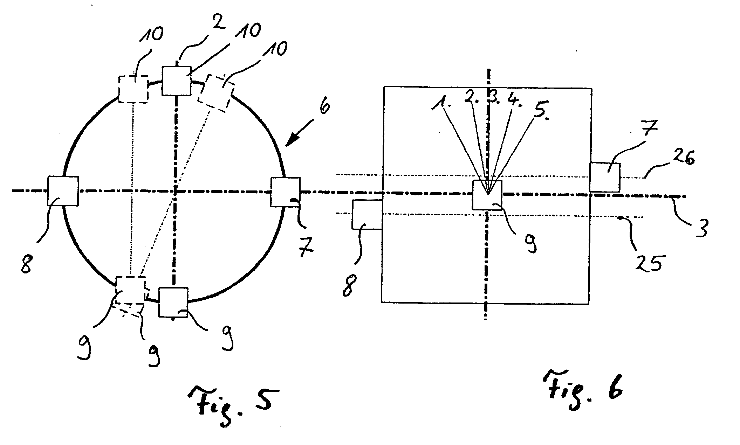

In Figur 6 ist beispielhaft dargestellt, daß sich die Seilaufnahmen 7, 8, 9, 10 auch in unterschiedlichen Ebenen befinden können, wodurch ebenfalls eine Abhängigkeit der Wähl- und Schaltbewegung voneinander erreicht wird.
Die in Figur 5 und 6 dargestellten Beispiele können jeweils in Kombination und auch für beide Schwenkachsen angewendet werden.

### Bezugszeichen

- 1: Handschalthebel
- 2: Schwenkachse
- 3: Schwenkachse
- 4: Kraftübertragungseinrichtung
- 5: Seilzüge
- 6: Lagergehäuse
- 7: Seilaufnahme
- 8: Seilaufnahme
- 9: Seilaufnahme
- 10: Seilaufnahme
- 11: Abstand
- 12: Abstand
- 15: Schwenkachse
- 16: Betätigungsglied
- 17: Seilrichtung
- 18: Kugelpfanne
- 19: Kugelzapfen
- 20: Vorrichtung
- 21: Dritte Achse
- 22: Bolzen
- 23: Freies Ende des Bolzen
- 24: Nut
- 25: Ebene
- 26: Ebene
- 27: Ende der Seilzüge
- 28: Schaltgehäuse
- 29: Befestigungselement
- 30: Befestigungselement
- 31: Abstand
- 32: Abstand
- 33: Bewegungskomponente
- 34: Bewegungskomponente
- 35: Bewegungskomponente
- 36: Bewegungskomponente

## Patentansprüche

1. Schalteinrichtung zur manuellen Betätigung eines mehrgängigen Getriebes, mit einem Handschalthebel (1), der zum Wählen von Schaltgassen um eine erste Schwenkachse (3) und zum Schalten von Gängen um eine zweite Schwenkachse (2) schwenkbar ist, und bei der die Schwenkbewegungen des Handschalthebels (1) mittels einer Kraftübertragungseinrichtung (4) auf gangwählende und gangschaltende Betätigungsglieder wie zum Beispiel eine Schaltwelle des Getriebes übertragen werden, wobei die Wähl- und / oder Schaltbewegung durch auf Zug belastete Seilzüge (5) übertragen werden und wobei die Kraftübertragungseinrichtung (4) ein mit dem Handschalthebel (1) fest verbundenes Lagergehäuse (6) aufweist und mindestens zu einer Schwenkachse (2; 3) am Lagergehäuse (6) jeweils zwei Seilaufnahmen (7, 8; 9, 10) zugeordnet sind, die gleiche oder unterschiedliche Abstände (11, 12; 13, 14) von der Schwenkachse (2; 3) aufweisen können, und bei der Stell- und Rückstellbewegung die Seilzüge (5) ständig unter Zugspannung stehen, wobei das Lagergehäuse (6) eine Kugelpfanne (18) aufweist und damit auf einem Kugelzapfen (19) gelagert ist, der fest mit einem Schaltgehäuse (28) verbunden ist, und daß das Lagergehäuse (6) eine Vorrichtung hat, die das Lagergehäuse (6) hindert, sich um eine dritte Achse (21) zu schwenken, **dadurch gekennzeichnet, daß** die Vorrichtung (20) aus einem Bolzen (22) besteht, der auf einer Schwenkachse (3) außen am Lagergehäuse (6) befestigt ist und mit seinem freien Ende (23) in einer Nut (24) geführt ist, die Schwenkbewegungen zu zwei definierten Schwenkachsen (2; 3) zuläßt.

2. Schalteinrichtung nach Anspruch 1, **dadurch gekennzeichnet, daß** bei Schaltbewegungen eine gleichzeitige Wählbewegung erfolgt oder umgekehrt.

3. Schalteinrichtung nach einem der Ansprüche 1 oder 2, **dadurch gekennzeichnet, daß** die Seilaufnahmen (7, 8, 9, 10) versetzt zu den Schwenkachsen (2, 3) angeordnet sind.

4. Schalteinrichtung nach einem der Ansprüche 1 bis 3, **dadurch gekennzeichnet, daß** die Schwenkachsen (2, 3) nicht senkrecht aufeinander stehen.

5. Schalteinrichtung nach einem der Ansprüche 1 bis 4, **dadurch gekennzeichnet, daß** die Schwenkachsen (2, 3) in unterschiedlichen Ebenen (25, 26) liegen.

6. Schalteinrichtung nach einem der oberen Ansprüche, **dadurch gekennzeichnet, daß** die Seilzüge (5) Enden (27) aufweisen, die winkelig in den Seilaufnahmen (7, 8, 9, 10) auslenkbar sind.

7. Schalteinrichtung nach Anspruch 6, **dadurch gekennzeichnet, daß** die Enden (27) der Seilzüge (5) kugelig sind und diese in kugelschalförmigen Seilaufnahmen (7, 8, 9, 10) am Lagergehäuse (6) gelagert sind oder umgekehrt.

## Claims

1. Gear shift device for manual actuation of a multispeed gearbox, with a manual shift lever (1), which can be pivoted about a first pivoting axis (3) to choose gear shift slots and can be pivoted about a second pivoting axis (2) to shift gears, and in which the pivoting motions of the manual shift lever (1) are transmitted by means of a force transmission device (4) to gear-choosing and gear-shifting actuating members such as, for example, a gear shift shaft of the gearbox, the choosing and/or shift motion being transmitted by cable controls (5) subjected to tension, and the force transmission device (4) having a bearing housing (6) firmly connected to the manual shift lever (1), and two cable holders (7, 8; 9, 10), which can be at the same distance or at different distances (11, 12; 13, 14) from the pivoting axis (2; 3) being assigned in each case at least to one pivoting axis (2; 3) on the bearing housing (6), and the cable controls (5) being continuously under tensile stress during the actuating and return motion, the bearing housing (6) having a ball socket (18) and thereby being supported on a ball pivot (19), which is firmly connected to a gear shift housing (28), and in that the bearing housing (6) has an apparatus (20) which prevents the bearing housing (6) from pivoting about a third axis (21), **characterized in that** the apparatus (20) comprises a pin (22), which is secured on the pivoting axis (3) on the outside of the bearing housing (6) and is guided by its free end (23) in a slot (24) that permits pivoting motions relative to two defined pivoting axes (2; 3).

2. Gear shift device according to Claim 1, **characterized in that** during gear shift motions there is a simultaneous choosing motion or vice versa.

3. Gear shift device according to either of Claims 1 and 2, **characterized in that** the cable holders (7, 8, 9, 10) are arranged offset relative to the pivoting axes (2, 3).

4. Gear shift device according to one of Claims 1 to 3, **characterized in that** the pivoting axes (2, 3) are not perpendicular to one another.

5. Gear shift device according to one of Claims 1 to 4, **characterized in that** the pivoting axes (2, 3) are in different planes (25, 26).

6. Gear shift device according to one of the above claims, **characterized in that** the cable controls (5) have ends (27) that can be subjected to angular deflection in the cable holders (7, 8, 9, 10).

7. Gear shift device according to Claim 6, **characterized in that** the ends (27) of the cable controls (5) are spherical and these are supported in cable holders (7, 8, 9, 10) in the form of spherical shells on the bearing housing (6) or vice versa.

## Revendications

1. Dispositif de commande de vitesse manuelle pour commander une boîte de vitesses à plusieurs rapports, avec un levier de vitesse à main (1), qui peut pivoter autour d'un premier axe de pivotement (3) pour sélectionner des vitesses et autour d'un second axe de pivotement (2) pour changer de rapports, et dans lequel les mouvements de pivotement du levier de vitesse à main (1) sont transmis au moyen d'un dispositif de transmission d'effort (4) à des organes de commande de sélection de rapport et de changement de rapport comme par exemple un axe de commande de la boîte de vitesses, dans lequel les mouvements de sélection et/ou de changement sont transmis par des câbles de transmission soumis à la traction (5) et dans lequel le dispositif de transmission d'effort (4) présente un corps de palier (6) solidement assemblé au levier de vitesse à main (1) et chaque fois au moins deux logements de câble (7, 8; 9, 10) sont associés à un axe de pivotement (2; 3) sur le corps de palier (6), qui peuvent présenter des distances égales ou différentes (11, 12; 13, 14) de l'axe de pivotement (2; 3), et les câbles de transmission (5) sont en permanence soumis à une contrainte de traction lors du mouvement d'engagement et de rappel, dans lequel le corps de palier (6) présente un coussinet sphérique (18) et est supporté par l'intermédiaire de celui-ci sur un pivot sphérique (19), qui est solidement assemblé à un boîtier de commande (28), et le corps de palier (6) comporte un dispositif (20), qui empêche le corps de palier (6) de pivoter autour d'un troisième axe (21), **caractérisé en ce que** le dispositif (20) se compose d'une tige (22), qui est fixée sur un axe de pivotement (3) extérieurement au corps de palier (6) et qui est guidée par son extrémité libre (23) dans une rainure (24), qui permet des mouvements de pivotement par rapport à deux axes de pivotement définis (2; 3).

2. Dispositif de commande suivant la revendication 1, **caractérisé en ce qu'**il se produit un mouvement de sélection simultané lors de mouvements de changement, ou inversement.

3. Dispositif de commande suivant l'une des revendications 1 ou 2, **caractérisé en ce que** les logements de câble (7, 8, 9, 10) sont disposés en décalage par rapport aux axes de pivotement (2, 3).

4. Dispositif de commande suivant l'une quelconque des revendications 1 à 3, **caractérisé en ce que** les axes de pivotement (2, 3) ne sont pas perpendiculaires l'un à l'autre.

5. Dispositif de commande suivant l'une quelconque des revendications 1 à 4, **caractérisé en ce que** les axes de pivotement (2, 3) sont situés dans des plans différents (25, 26).

6. Dispositif de commande suivant l'une quelconque des revendications précédentes, **caractérisé en ce que** les câbles de transmission (5) présentent des extrémités (27), qui peuvent être déviées en oblique dans les logements de câble (7, 8, 9, 10).

7. Dispositif de commande suivant la revendication 6, **caractérisé en ce que** les extrémités (27) des câbles de transmission (5) sont sphériques et celles-ci sont supportées sur le corps de palier (6) dans des logements de câble (7, 8, 9, 10) en forme de calotte sphérique, ou inversement.
